# EUROPEAN PATENT APPLICATION

(11) **EP 4 424 738 A1**
(43) Date of publication of application: **04.09.2024**
(21) Application number: 22886568.9
(22) Date of filing: 28.09.2022
(51) Int. Cl.: C08G 18/61, C08G 18/10, C08G 18/28

(54) **POLYORGANOSILOXANE AND METHOD FOR PRODUCING SAME**

(30) Priority: 29.10.2021 JP 2021177863
(71) Applicant: SHIN-ETSU CHEMICAL CO., LTD., Tokyo 1000005 (JP)
(72) Inventor: NODA Daisuke, Annaka-shi, Gunma 379-0224 (JP); IRIFUNE Shinji, Annaka-shi, Gunma 379-0224 (JP); NAKAGAWA Hideo, Tokyo 100-0005 (JP)
(74) Representative: Sonnenhauser, Thomas Martin
(86) International application number: PCT/JP2022/036187
(87) International publication number: WO 2023/074236

(57) **Abstract**

The present invention is a polyorganosiloxane represented by the following formula (1): 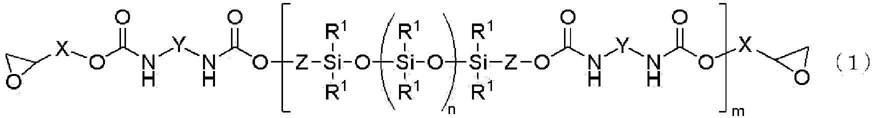 wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2. Thus, provided is a polyorganosiloxane which is compatible with other polar compounds without problems even under conditions where a conventional epoxy-modified silicone is not very compatible with the compounds.

## Description

### TECHNICAL FIELD

The present invention relates to a polyorganosiloxane and a method for producing the same.

### BACKGROUND ART

An epoxy-modified silicone is a polyorganosiloxane having an epoxy group which is a reactive group. The epoxy-modified silicone has been used in applications such as a resin modifier, a fiber treating agent, and a coating additive using its reactivity (Patent Documents 1 to 3).

However, there has been a problem in the epoxy-modified silicone that, as the chain length of a polyorganosiloxane increases, the compatibility with other polar compounds is deteriorated, resulting in separation.

For example, although an amine-based curing agent that is known as a curing agent for an epoxy resin, is mixed with polydimethylsiloxane having glycidyl groups at both ends, a phase separation often occurs without a solvent. When the polydimethylsiloxane is not compatible with the curing agent, it is difficult to obtain a cured product.

### CITATION LIST

### PATENT LITERATURE

Patent Document 1: JP 2019-059958 A
Patent Document 2: JP 2016-028426 A
Patent Document 3: WO 2019/176074 A1

### SUMMARY OF INVENTION

### TECHNICAL PROBLEM

The present invention has been made in consideration of such circumstances, and has for its object to provide a polyorganosiloxane which is compatible with other polar compounds without problems even under conditions where a conventional epoxy-modified silicone is not very compatible with the compounds.

### SOLUTION TO PROBLEM

To solve the above problem, the present invention provides a polyorganosiloxane represented by the following formula (1): 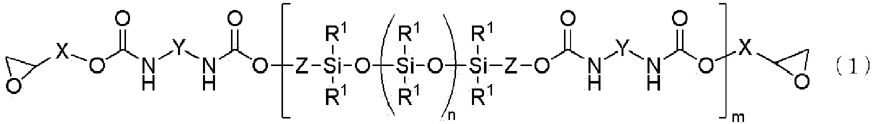 wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2.

Such a polyorganosiloxane is compatible with other polar compounds without problems even under conditions where a conventional epoxy-modified silicone is not very compatible with the compounds.

In the present invention, the polyorganosiloxane represented by the formula (1) preferably has a number average molecular weight of 500 to 100,000 in terms of standard polystyrene.

Such a polyorganosiloxane has a molecular weight sufficient to cause the epoxy groups at both ends to react with a curing agent to obtain a cured product.

In the present invention, the polyorganosiloxane represented by the formula (1) preferably has an epoxy equivalent (g/mol) of 300 to 5,000 g/mol.

Such a polyorganosiloxane has the epoxy equivalent sufficient to cause the epoxy groups at both ends to react with the curing agent to obtain a cured product having excellent physical properties.

In the present invention, the polyorganosiloxane represented by the formula (1) preferably includes hexamethylcyclotrisiloxane (D3), octamethylcyclotetrasiloxane (D4), decamethylcyclopentasiloxane (D5), and dodecamethylcyclohexasiloxane (D6) in a total amount equal to or less than 3,000 ppm.

Such a polyorganosiloxane is preferable because there is only a small possibility that various problems occur due to a low molecular cyclic siloxane.

The present invention also provides a method for producing a polyorganosiloxane represented by the following formula (1): 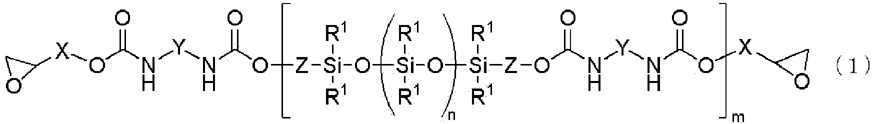
wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2,
the method comprising,
reacting a both-end carbinol-modified silicone represented by the following formula (2), a diisocyanate compound represented by the following formula (3), and a compound having an epoxy group and a hydroxyl group represented by the following formula (4) in presence or absence of a catalyst, and in presence or absence of a solvent:

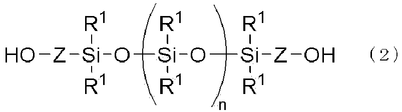

   O=C=N-Y-N=C=O (3) 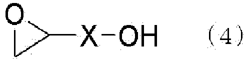
wherein each of R¹, X, Y, Z, and "n" is same as the above.

Such a method for producing a polyorganosiloxane can efficiently produce polyorganosiloxane which is compatible with other polar compounds without problems even under conditions where a conventional epoxy-modified silicone is not very compatible with the compounds.

In the present invention, a both-end carbinol-modified silicone having a hydroxyl value (OH value) of 10 to 500 mg KOH/g is preferably used as the both-end carbinol-modified silicone represented by the formula (2) .

Such a method for producing a polyorganosiloxane allows a polyorganosiloxane to be more efficiently produced.

In the present invention, the both-end carbinol-modified silicone represented by the formula (2) preferably includes hexamethylcyclotrisiloxane (D3), octamethylcyclotetrasiloxane (D4), decamethylcyclopentasiloxane (D5), and dodecamethylcyclohexasiloxane (D6) in a total amount equal to or less than 3,000 ppm.

Such a method for producing a polyorganosiloxane can efficiently produce a polyorganosiloxane in which there is only a small possibility that various problems occur due to a low molecular cyclic siloxane.

In the present invention, the reaction is preferably performed such that a ratio of a number of moles of a hydroxyl group (OH) (mol OH) in the both-end carbinol-modified silicone represented by the formula (2) to a number of moles of an isocyanate group (NCO) (mol NCO) in the diisocyanate compound represented by the formula (3) (NCO/OH ratio) is 1.5 to 2.0.

Such a method for producing a polyorganosiloxane allows a polyorganosiloxane to be further more efficiently produced.

### ADVANTAGEOUS EFFECTS OF INVENTION

The present invention relates to a polyorganosiloxane and a method for producing the same, and more specifically, to a polyorganosiloxane having epoxy groups at both ends and having a urethane bond in a main chain, and a method for producing the same. Since the polyorganosiloxane of the present invention has epoxy groups, and thus can be used for various applications by using its reactivity. For example, since the polyorganosiloxane is compatible with an amine-based curing agent, a cured product can be obtained by reacting with epoxy groups. The thus obtained cured product has excellent in adhesion and bonding properties to a substrate by a hydrogen bonding with a hydroxyl group and a urethane group remaining after the reaction. Furthermore, a flexible and high-strength cured product such as a polyurethane resin can be obtained. Thus, the polyorganosiloxane of the present invention is highly useful because of having properties which have not been seen in the conventional epoxy-modified silicone. By reducing amount of low molecular cyclic siloxanes, when producing the cured product, deposition in a device, problems of equipment, and the like due to volatilization and diffusion of the low molecular cyclic siloxanes can be prevented in advance.

### DESCRIPTION OF EMBODIMENTS

As noted above, there has been a demand for development of a polyorganosiloxane which can be compatible with other polar compounds without problems even under conditions where a conventional epoxy-modified silicone is not very compatible with the compounds.

As a result of extensive study to achieve the above object, the present inventors have found that a polyorganosiloxane having epoxy groups at both ends and a urethane bond in a main chain, could achieve the above object. This finding has led to the completion of the present invention.

Specifically, the present invention is a polyorganosiloxane represented by the following formula (1) : 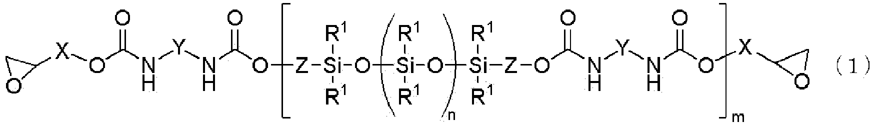 wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2.

Hereinafter, the present invention will be described in detail, but the present invention is not limited thereto.

The present invention is a polyorganosiloxane represented by the following formula (1).

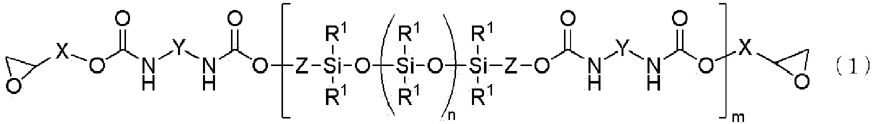

In the formula (1), R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2.

In the formula (1), R¹ each independently includes a group selected from an alkyl group having 1 to 12 carbon atoms and preferably 1 to 8 carbon atoms, an aryl group having 6 to 12 carbon atoms and preferably 6 to 9 carbon atoms, and an aralkyl group having 7 to 12 carbon atoms and preferably 7 to 10 carbon atoms, or a hydroxyl group. Specific examples of R¹ include a linear or branched alkyl group such as a methyl group, an ethyl group, an n-propyl group, an isopropyl group, an n-butyl group, an isobutyl group, an s-butyl group, a t-butyl group, an n-pentyl group, an n-hexyl group, an n-heptyl group, an n-octyl group, a 2-ethylhexyl group, an n-nonyl group, and an n-decyl group; a cycloalkyl group such as a cyclohexyl group; an aryl group such as a phenyl group and a naphthyl group; and an aralkyl group such as a benzyl group. Among them, a methyl group or a phenyl group is preferable.

In the formula (1), X each independently represents a divalent alkylene group having 1 to 10 carbon atoms and preferably 1 to 8 carbon atoms.

Specific examples of the alkylene group having 1 to 10 carbon atoms include a methylene group, an ethylene group, a propylene group, an n-hexylene group, and an n-octylene group. A methylene group is preferable.

In the formula (1), Y each independently represents a group selected from an alkylene group having 5 to 30 carbon atoms, an arylene group having 6 to 30 carbon atoms, and an aralkylene group having 7 to 30 carbon atoms.

The alkylene group having 5 to 30 carbon atoms may be any of linear, branched, or cyclic, and specific examples thereof include a linear or branched alkylene group such as an n-pentylene group, an n-hexylene group, an n-heptylene group, an n-octylene group, a 2-ethylhexylene group, an n-decylene group, an n-undecylene group, an n-dodecylene group, an n-tridecylene group, an n-tetradecylene group, an n-pentadecylene group, an n-hexadecylene group, an n-heptadecylene group, an n-octadecylene group, an n-nonadecylene group, and an n-eicosanylene group.

The alkylene group may have equal to or more than one ether bond in the middle of a molecular chain. Specific examples include a group having an ether bond such as an ethyleneoxy group, a propyleneoxy group, and a butyleneoxy group, and there may be a plurality of ether bonds.

Examples of the arylene group having 6 to 30 carbon atoms include an o-phenylene group, an m-phenylene group, a p-phenylene group, a 3,5-tolylene group, a 2,4-tolylene group, a 2,6-tolylene group, a 1,2-naphthylene group, a 1,8-naphthylene group, a 2,3-naphthylene group, a 4,4'-biphenylene group, and a 4,4'-methylenebisphenyl group.

Examples of the aralkylene group having 7 to 30 carbon atoms include an o-xylylene group, an m-xylylene group, a p-xylylene group, and a 1,3-phenylenebis(2-propyl) group.

Examples of the Y preferably include the following groups. The dotted line indicates a bonding point with a nitrogen atom in a urethane bond in the formula (1), and a hydrogen atom is omitted by
convention.

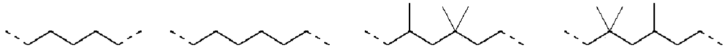

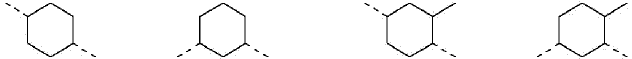

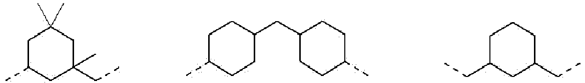

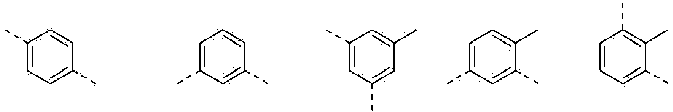

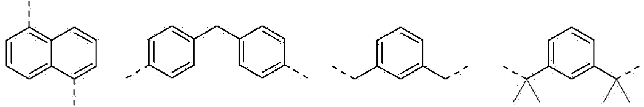

In the formula (1), Z each independently represents an alkylene group having 1 to 20 carbon atoms, and preferably 3 to 10 carbon atoms. Equal to or more than one ether bond may be interposed in an alkylene chain having 1 to 20 carbon atoms. A propylene group (-CH₂CH₂CH₂-) and an ethylene oxypropylene group (*-CH₂CH₂OCH₂CH₂CH₂-) are preferable. Note that "*" indicates a bond with an oxygen atom in a urethane bond in the formula (1).

In the formula (1), "n" represents an integer of 0 to 100. Preferably, "n" is an integer from 0 to 60.

In the formula (1), "m" represents an average degree of polymerization, and "m" is 1 to 2 and preferably 1 or 2. When "m" exceeds 2, a uniform cured product cannot be obtained, which is therefore not preferable.

The polyorganosiloxane of the present invention has a number average molecular weight of preferably 500 to 100,000, more preferably 500 to 50,000, and even more preferably 500 to 20,000. Within this range, the polyorganosiloxane has a molecular weight sufficient to cause the epoxy groups at both ends to react with the curing agent to obtain a cured product. The number average molecular weight refers to a number average molecular weight in terms of standard polystyrene in a gel permeation chromatography (GPC) measurement under the following measurement conditions.

### Measurement Conditions

Developing solvent: Tetrahydrofuran (THF)
Flow rate: 0.6 mL/min
Detector: Refractive index detector (RI)
Column: TSK Guardcolumn SuperH-H
TSKgel SuperHM-N (6.0 mmI.D. × 15 cm × 1)
TSKgel SuperH2500 (6.0 mmI.D. × 15 cm × 1)
(both manufactured by Tosoh Corporation)
Column temperature: 40°C
Sample injection volume: 50 µL (THF solution with 0.3 mass% of concentration)

The polyorganosiloxane of the present invention has an epoxy equivalent (g/mol) of preferably 300 to 5,000 g/mol, and more preferably 500 to 2,500 g/mol. Within this range, the polyorganosiloxane has the epoxy equivalent sufficient to cause the epoxy groups at both ends to react with the curing agent to obtain a cured product having excellent physical properties. The epoxy equivalent (g/mol) can be calculated by adding hydrochloric acid to a sample having a predetermined mass dissolved in 1,4-dioxane and performing a back titration with a sodium hydroxide aqueous solution.

As described in WO 2016/111104 A1 and the like, there is a possibility that various problems occur due to low molecular cyclic siloxanes, and therefore the amount thereof is preferably reduced. The polyorganosiloxane represented by the formula (1) preferably contains hexamethylcyclotrisiloxane (D3), octamethylcyclotetrasiloxane (D4), decamethylcyclopentasiloxane (D5), and dodecamethylcyclohexasiloxane (D6) in a total amount equal to or less than 3,000 ppm, more preferably equal to or less than 2,000 ppm, and even more preferably equal to or less than 1,000 ppm. The lower the amount of low molecular cyclic siloxanes (D3 to D6), the better, and the lower limit value is not particularly limited, and may be, for example, equal to or more than 0 ppm.

The amount of the low molecular cyclic siloxanes (D3 to D6) can be determined by gas chromatography (GC) using a sample obtained by extracting and diluting the polyorganosiloxane of the present invention with an organic solvent.

The present invention also provides a method for producing a polyorganosiloxane represented by the following formula (1): 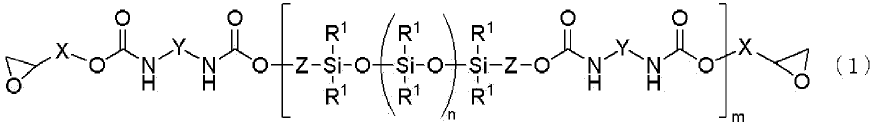
wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2,
the method including,
reacting a both-end carbinol-modified silicone represented by the following formula (2), a diisocyanate compound represented by the following formula (3), and a compound having an epoxy group and a hydroxyl group represented by the following formula (4) in presence or absence of a catalyst, and in presence or absence of a solvent:

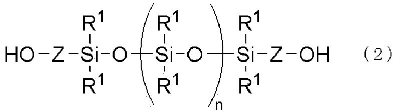

   O=C=N-Y-N=C=O (3) 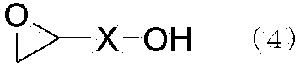
wherein each of R¹, X, Y, Z, and "n" is same as the above.

As for the method for producing a polyorganosiloxane of the present invention, the known method for producing a urethane compound may be used, but the aforementioned production method allows the polyorganosiloxane of the present invention to be efficiently obtained.

For example, a polyol used as a raw material, and catalysts and solvents are added if necessary, and the temperature is raised under an inert gas atmosphere. A polyisocyanate used as a raw material is added thereto collectively, dividedly, or dropwise to produce an isocyanate prepolymer. Subsequently, as a terminal-blocking raw material, a compound having equal to or more than one epoxy group and one hydroxyl group in one molecule is added and matured, and thereby, the target polyorganosiloxane can be obtained.

In addition, catalysts and solvents are firstly added to the polyisocyanate used as a raw material if necessary, and the mixture is reacted with a compound having equal to or more than one epoxy group and one hydroxyl group in one molecule added dropwise and matured, and then a polyol used as a raw material is added to the mixture and matured, and thereby the target polyorganosiloxane can also obtained.

In the method for producing the polyorganosiloxane of the formula (1), examples of a polyol used as a raw material include a both-end carbinol-modified silicone represented by the following formula (2) or (5): 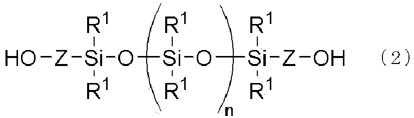
wherein R¹, Z, "n" are same as the above; and 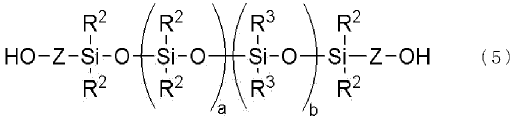
wherein R² each independently represents a group selected from an alkyl group having 1 to 12 carbon atoms and an aralkyl group having 7 to 12 carbon atoms, or a hydroxyl group, R³ each independently represents an aryl group having 6 to 12 carbon atoms, "a" represents an integer of 0 to 100, "b" represents an integer of 1 to 100, a+b represents an integer of 1 to 100, the structural unit in parentheses may be block or random, and Z is same as the above.

In the formula (5), R² each independently represents a group selected from an alkyl group having 1 to 12 carbon atoms and an aralkyl group having 7 to 12 carbon atoms, or a hydroxyl group, R³ each independently represents an aryl group having 6 to 12 carbon atoms, "a" represents an integer of 0 to 100, "b" represents an integer of 1 to 100, a+b represents an integer of 1 to 100, the structural unit in parentheses may be block or random, and Z is same as the above.

A method for producing a both-end carbinol-modified silicone includes, for example, reacting a polyorganosiloxane having silicone-hydrogen bonds at both ends obtained by synthesis using 1,1,3,3-tetramethyldisiloxane and a cyclic siloxane such as 1,1,3,3,5,5,7,7-octamethylcyclotetrasiloxane in presence of an acid catalyst with a compound having a hydroxyl group and a carbon-carbon unsaturated bond group at the end in presence of a platinum catalyst such as Karstedt's catalyst.

In addition, as a compound having a hydroxyl group and a carbon-carbon unsaturated bond group at the end, a compound having a hydroxyl group protected by a trimethylsilyl group may be used. In this case, deprotection of the trimethylsilyl group by an alcohol compound such as methanol after the reaction allows a desired compound to be obtained. Specific examples of the compound having a hydroxyl group protected by a trimethylsilyl group include allyloxytrimethylsilane (manufactured by FUJIFILM Wako Pure Chemical Corporation).

A both-end carbinol-modified silicone having a hydroxyl value (OH value) of preferably 10 to 500 mg KOH/g, and more preferably 20 to 200 mg KOH/g is used as the both-end carbinol-modified silicone represented by the formula (2) or (5) .

In the method for producing the polyorganosiloxane of the formula (1), examples of the polyisocyanate used as another raw material include a diisocyanate compound represented by the following formula (3):

O=C=N-Y-N=C=O (3)

wherein Y is same as the above.

Specific examples include the following compounds, which are also available as commercial products. A hydrogen atom is omitted by convention and stereoisomers in the following structures are also included.

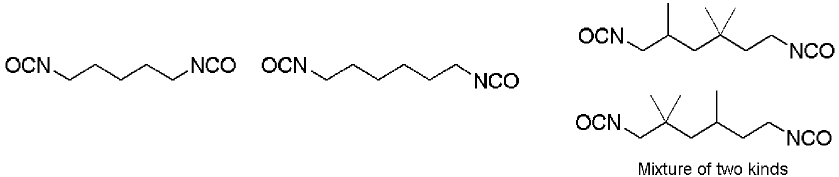

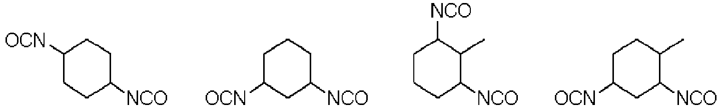

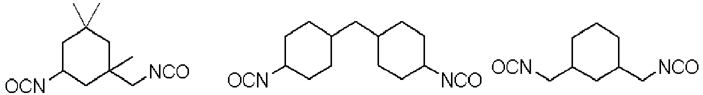

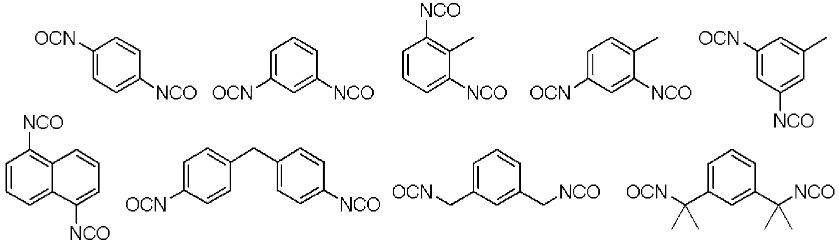

In the formula (1), "m" can be calculated from a ratio of a number of moles of a hydroxyl group (OH) (mol OH) in the both-end carbinol-modified silicone represented by the formula (2) to a number of moles of an isocyanate group (NCO) (mol NCO) in the diisocyanate compound represented by the formula (3) (NCO/OH ratio). The reaction is preferably performed such that an NCO/OH ratio is 1.5 to 2.0, and more preferably 1.67 to 2.0.

In the method for producing the polyorganosiloxane of the formula (1), a compound which is used as a terminal-blocking raw material and has equal to or more than one epoxy group and one hydroxyl group in a molecule includes a compound represented by the formula (4) : 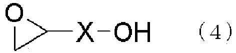 wherein X is same as the above.

Specific examples include glycidol, which is available as a commercial product.

The amount of the compound having an epoxy group and a hydroxyl group may be any amount as long as all remaining NCO is reacted in the reaction between a polyol and a polyisocyanate, and is preferably 1.0 to 1.1 mol and more preferably 1.0 to 1.05 mol based on 1 mol of the remaining NCO. The remaining NCO can be confirmed by measuring an isocyanate equivalent.

The isocyanate equivalent (g/mol) can be determined by adding a solution prepared by adding dibutylamine to dehydrated toluene so that the concentration of dibutylamine is 0.1 mol% to a sample having a predetermined mass, diluting the mixture with isopropanol, and then performing a back titration using hydrochloric acid.

In the method for producing a polyorganosiloxane of the present invention, solvents are not preferably used, but in a case where viscosity increases significantly, and the like, a reaction solvent is preferably used. In this case, an organic solvent that does not react with an isocyanate group and an epoxy group is preferably used.

Examples of the organic solvent include an aromatic compound such as toluene and xylene; an aliphatic compound such as hexane, heptane, and cyclohexane; an ether compound such as tetrahydrofuran; a ketone compound such as acetone, methyl ethyl ketone, methyl isobutyl ketone, and cyclohexanone; an ester compound such as methyl acetate, ethyl acetate, and butyl acetate; and an amide compound such as N,N-dimethylformamide, N,N-dimethylacetamide, and N-methylpyrrolidone.

In the method for producing a polyorganosiloxane of the present invention, although catalysts may not be used, catalysts may be added to accelerate the reaction.

Examples of the catalyst include an amine catalyst such as triethylamine, 1,8-diazabicyclo[5.4.0]undeca-7-en, and 1,4-diazabicicyclo[2.2.2]octane; a tin catalyst such as dibutyltin dilaurate and dioctyltin dilaurate; a bismuth catalyst such as bismuth 2-ethylhexanoate and bismuth octoate; a titanium catalyst such as tetrabutyl orthotitanate, tetra(2-ethylhexyl)orthotitanate, and titanium diisopropoxide bis(acetylacetonate); and a zirconium catalyst such as zirconium tetrabutoxide and zirconium tetraacetylacetonate.

As the reaction conditions in the method for producing a polyorganosiloxane of the present invention, the reaction is preferably performed in an atmosphere of an inert gas such as nitrogen or argon to prevent moisture from being mixed. The reaction temperature is preferably from room temperature (20°C) to 150°C, and more preferably from room temperature (20°C) to 120°C. The reaction time is preferably from 0.5 hours to 60 hours, and more preferably from 0.5 hours and 24 hours.

In the method for producing a polyorganosiloxane of the present invention, it is preferable that the both-end carbinol-modified silicone represented by the formula (2) and the polyorganosiloxane which is used as a raw material thereof and has silicon-hydrogen bonds at both ends are purified, for example, by stripping under heating and reduced pressure in advance, and a total amount of the low molecular cyclic siloxanes (D3 to D6) is set to equal to or less than 3,000 ppm.

That is, in the method for producing a polyorganosiloxane of the present invention, it is preferable to use the both-end carbinol-modified silicone represented by the formula (2) including hexamethylcyclotrisiloxane (D3), octamethylcyclotetrasiloxane(D4), decamethylcyclopentasiloxane (D5), and dodecamethylcyclohexasiloxane (D6) in a total amount equal to or less than 3,000 ppm. The lower the amount of the low molecular cyclic siloxanes (D3 to D6), the better. The lower limit value is not particularly limited, and may be, for example, equal to or higher than 0 ppm.

### EXAMPLE

Hereinafter, the present invention will be specifically described with reference to Examples and Comparative Examples. However, the present invention is not limited thereto. Viscosity was measured with a type B viscometer (TVB-10, manufactured by Toki Sangyo Co., Ltd.). About 1.5 g of a sample was accurately weighed in an aluminum petri dish, the sample was heated at 105°C for 3 hours in a hot air circulation-type dryer, and volatile content was calculated by weight change before and after heating. Hydrochloric acid was added to a sample having a predetermined mass that is dissolved in 1,4-dioxane, and a back titration was performed with sodium hydroxide using COM-1760S manufactured by HIRANUMA Co., Ltd. as a titrator to measure an epoxy equivalent. GPC measurement was performed using HLC-8320 GPC manufactured by Tosoh Corporation and tetrahydrofuran as a solvent to determine a number average molecular weight Mn and a weight average molecular weight Mw.

### Example 1

A 500 mL separable flask was charged with 70.15 g (0.631 mol NCO) of isophorone diisocyanate (Desmodur I, manufactured by Covestro AG), and a mechanical stirrer, a stirring blade, a dimroth reflux tube, a nitrogen gas inlet, and a thermometer were attached to the flask to flow nitrogen gas. Next, 0.25 g (0.1 mass%) of K-KAT XK-640 (manufactured by Kusumoto Chemicals, Ltd., bismuth carboxylate, containing 18% bismuth) as a catalyst was added, and the temperature was raised until the internal temperature reached 60°C. Using a 300 mL dropping funnel, 200.00 g (0.421 mol OH, NCO/OH = 1.5) of 3-(2-hydroxyethoxy)propyldimethylsiloxy-terminated polydimethylsiloxane containing D3 of 64 ppm, D4 of 59 ppm, D5 of 23 ppm, and D6 of 226 ppm (n = 8, OH value was 118 mg KOH/g) was added thereto by a quarter of a liquid amount at a time over 1 hour, and the mixture was then matured at 70°C for 3 hours. Thereafter, 15.72 g (0.211 mol) of glycidol (manufactured by FUJIFILM Wako Pure Chemical Corporation) was added and the mixture was matured at 70°C for 2 hours to obtain 240.00 g of a colorless, slightly turbid, viscous liquid. Because of NCO/OH = 1.5, "m" is 2. The physical properties are shown in Table 1.

The low molecular cyclic siloxanes were extracted with 10 mL of hexane containing tetradecane as an internal standard for 1 g of a sample, and measured by GC. As a result, the total amount of D3 to D6 was 201 ppm (D3: 15 ppm, D4: 20 ppm, D5: 16 ppm, and D6: 150 ppm) .

### Example 2

A 500 mL separable flask was charged with 35.71 g (0.321 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.25 g (0.1 mass%) of K-KAT XK-640 as a catalyst was added, and the temperature was raised until the internal temperature reached 60°C. Using a 300 mL dropping funnel, 200.00 g (0.214 mol OH, NCO/OH = 1.5) of 3-(2-hydroxyethoxy)propyldimethylsiloxy-terminated polydimethylsiloxane containing D3 of <5 ppm, D4 of 24 ppm, D5 of 24 ppm, and D6 of 107 ppm (n = 20, OH value was 60 mg KOH/g) was added thereto by a quarter of a liquid amount at a time over 1 hour, and the mixture was then matured at 70°C for 3 hours. Thereafter, 8.05 g (0.108 mol) of glycidol was added and the mixture was matured at 70°C for 2 hours to obtain 277.05 g of a colorless, slightly turbid, viscous liquid. Because of NCO/OH = 1.5, "m" is 2. The physical properties are shown in Table 1.

The low molecular cyclic siloxanes were diluted with 10 mL of acetone containing tetradecane as an internal standard for 1 g of a sample, and measured by GC. As a result, the total amount of D3 to D6 was <20 ppm (D3: <5 ppm, D4: <5 ppm, D5: <5 ppm, and D6: <5 ppm).

### Example 3

A 500 mL separable flask was charged with 20.80 g (0.187 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.23 g (0.1 mass%) of K-KAT XK-640 as a catalyst was added, and the temperature was raised until the internal temperature reached 60°C. Using a 300 mL dropping funnel, 200.00 g (0.124 mol OH, NCO/OH = 1.5) of 3-(2-hydroxyethoxy)propyldimethylsiloxy-terminated polydimethylsiloxane containing D3 of <5 ppm, D4 of 15 ppm, D5 of 22 ppm, and D6 of 439 ppm (n = 40, OH value was 35 mg KOH/g) was added thereto over 40 minutes, and the mixture was then matured at 70°C for 3 hours. Thereafter, 4.70 g (0.063 mol) of glycidol was added and the mixture was matured at 70°C for 2.5 hours to obtain 214.09 g of a colorless, slightly turbid, viscous liquid. Because of NCO/OH = 1.5, "m" is 2. The physical properties are shown in Table 1.

The low molecular cyclic siloxanes were diluted with 10 mL of acetone containing tetradecane as an internal standard for 1 g of a sample, and measured by GC. As a result, the total amount of D3 to D6 was <320 ppm (D3: <5 ppm, D4: <5 ppm, D5: <5 ppm, and D6: 305 ppm) .

### Example 4

A 500 mL separable flask was charged with 91.95 g (0.827 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.32 g (0.1 mass%) of K-KAT XK-640 as a catalyst was added, and the temperature was raised until the internal temperature reached 60°C. Using a 300 mL dropping funnel, 200.00 g (0.413 mol OH, NCO/OH = 2.0) of 3-(2-hydroxyethoxy)propyldimethylsiloxy-terminated polydimethylsiloxane containing D3 of 64 ppm, D4 of 59 ppm, D5 of 23 ppm, and D6 of 226 ppm (n = 8, OH value was 116 mg KOH/g) was added thereto over 30 minutes, and the mixture was then matured at 70°C for 3 hours. Thereafter, 30.80 g (0.415 mol) of glycidol was added and the mixture was matured at 70 C for 2 hours to obtain 319.17 g of a colorless, slightly turbid, viscous liquid. Because of NCO/OH = 2.0, "m" is 1. The physical properties are shown in Table 1.

The low molecular cyclic siloxanes were extracted with 10 mL of hexane containing tetradecane as an internal standard for 1 g of a sample, and measured by GC. As a result, the total amount of D3 to D6 was 305 ppm (D3: 54 ppm, D4: 52 ppm, D5: 16 ppm, and D6: 183 ppm) .

### Example 5

A 500 mL separable flask was charged with 26.22 g (0.236 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.24 g (0.1 mass%) of K-KAT XK-640 as a catalyst was added, and the temperature was raised until the internal temperature reached 60°C. Using a 300 mL dropping funnel, 200.00 g (0.118 mol OH, NCO/OH = 2.0) of 3-(2-hydroxyethoxy)propyldimethylsiloxy-terminated polydimethylsiloxane containing D3 of <5 ppm, D4 of 15 ppm, D5 of 22 ppm, and D6 of 439 ppm (n = 40, OH value was 33 mg KOH/g) was added thereto by a quarter of a liquid amount at a time over 1 hour, and the mixture was then matured at 70°C for 3.5 hours. Thereafter, 8.87 g (0.120 mol) of glycidol was added and the mixture was matured at 70 C for 3 hours to obtain 233.30 g of a colorless, slightly turbid, viscous liquid. Because of NCO/OH = 2.0, "m" is 1. The physical properties are shown in Table 1.

The low molecular cyclic siloxanes were diluted with 10 mL of acetone containing tetradecane as an internal standard for 1 g of a sample to measure by GC. As a result, the total amount of D3 to D6 was <353 ppm (D3: <5 ppm, D4: <5 ppm, D5: <5 ppm, and D6: 338 ppm).

### Comparative Example 1

A 500 mL separable flask was charged with 61.25 g (0.551 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.26 g (0.1 mass%) of K-KAT XK-640 as a catalyst was added, and the temperature was raised until the internal temperature reached 60°C. Using a 300 mL dropping funnel, 200.00 g (0.413 mol OH, NCO/OH = 1.33) of 3-(2-hydroxyethoxy)propyldimethylsiloxy-terminated polydimethylsiloxane containing D3 of 64 ppm, D4 of 59 ppm, D5 of 23 ppm, and D6 of 226 ppm (n = 8, OH value was 116 mg KOH/g) was added thereto over 30 minutes, and the mixture was then matured at 70°C for 3 hours. Thereafter, 10.46 g (0.141 mol) of glycidol was added and the mixture was matured at 70°C for 2 hours to obtain 266.50 g of a colorless, slightly turbid, viscous liquid. Because of NCO/OH = 1.33, "m" is 3.

The low molecular cyclic siloxanes were extracted with 10 mL of hexane containing tetradecane as an internal standard for 1 g of a sample, and measured by GC. As a result, the total amount of D3 to D6 was 348 ppm (D3: 62 ppm, D4: 58 ppm, D5: 18 ppm, and D6: 210 ppm) .

**[Table 1]**

| | | Ex. 1 | Ex. 2 | Ex. 3 | Ex. 4 | Ex. 5 | Comp Ex. 1 |
|---|---|---|---|---|---|---|---|
| Appearance | | Colorless, slightly turbid | Colorless, slightly turbid | Colorless, slightly turbid | Colorless, slightly turbid | Colorless, slightly turbid | Colorless, slightly turbid |
| Viscosity (Pa-s) | | 374.0 | 71.2 | 41.3 | 572.0 | 63.3 | 331.0 |
| Volatile content at 105°C for 3 hours (%) | | 0.2 | 0.3 | 1.6 | 0.7 | 2.1 | 0.7 |
| Epoxy equivalent (g/mol) | | 1090 | 1830 | 4490 | 830 | 2060 | 2180 |
| GPC Mn | | 3,540 | 5,800 | 8,300 | 2,850 | 5,200 | 4,670 |
| | Mw | 6, 900 | 11,920 | 19,020 | 4,650 | 12,010 | 10,070 |
| | Mw/Mn | 1.95 | 2.06 | 2.28 | 1.63 | 2.31 | 2.15 |
| Amount of low molecular cyclic siloxane (ppm) | | 201 | < 20 | < 320 | 305 | < 353 | 348 |

### Example 6

A 500 mL separable flask was charged with 9.90 g (0.118 mol NCO) of hexamethylene diisocyanate (manufactured by Tokyo Chemical Industry Co., Ltd.), and a mechanical stirrer, a stirring blade, a dimroth reflux tube, a nitrogen gas inlet, and a thermometer were attached to the flask to flow nitrogen gas. Next, 0.11 g (0.1 mass%) of K-KAT XK-640 as a catalyst was added, and the temperature was raised until the internal temperature reached 60°C. Using a 300 mL dropping funnel, 100.00 g (0.059 mol OH, NCO/OH = 2.0) of 3-(2-hydroxyethoxy)propyldimethylsiloxy-terminated polydimethylsiloxane (n = 40, OH value was 33 mg KOH/g) was added thereto by a quarter of a liquid amount at a time over 40 minutes, and the mixture was then matured at 70°C for 3 hours. Thereafter, 4.38 g (0.059 mol) of glycidol was added and the mixture was matured at 70°C for 2 hours to obtain 111.98 g of a white solid. Because of NCO/OH = 2.0, "m" is 1. The physical properties are shown in Table 2.

### Example 7

A 500 mL separable flask was charged with 15.43 g (0.118 mol NCO) of dicyclohexylmethane diisocyanate (manufactured by Tokyo Chemical Industry Co., Ltd., mixture of isomers), and a mechanical stirrer, a stirring blade, a dimroth reflux tube, a nitrogen gas inlet, and a thermometer were attached to the flask to flow nitrogen gas. Next, 0.11 g (0.1 mass%) of K-KAT XK-640 as a catalyst was added, and the temperature was raised until the internal temperature reached 60°C. Using a 300 mL dropping funnel, 100.00 g (0.059 mol OH, NCO/OH = 2.0) of 3-(2-hydroxyethoxy)propyldimethylsiloxy-terminated polydimethylsiloxane (n = 40, OH value was 33 mg KOH/g) was added thereto by a quarter of a liquid amount at a time over 40 minutes, and the mixture was then matured at 70°C for 3 hours. Thereafter, 4.40 g (0.059 mol) of glycidol was added and the mixture was matured at 70°C for 2 hours to obtain 117.59 g of a white solid. Because of NCO/OH = 2.0, "m" is 1. The physical properties are shown in Table 2.

### Example 8

A 500 mL separable flask was charged with 11.07 g (0.118 mol NCO) of xylylene diisocyanate (manufactured by Tokyo Chemical Industry Co., Ltd.), and a mechanical stirrer, a stirring blade, a dimroth reflux tube, a nitrogen gas inlet, and a thermometer were attached to the flask to flow nitrogen gas. Next, 0.11 g (0.1 mass%) of K-KAT XK-640 as a catalyst was added, and the temperature was raised until the internal temperature reached 60°C. Using a 300 mL dropping funnel, 100.00 g (0.059 mol OH, NCO/OH = 2.0) of 3-(2-hydroxyethoxy)propyldimethylsiloxy-terminated polydimethylsiloxane (n = 40, OH value was 33 mg KOH/g) was added thereto by a quarter of a liquid amount at a time over 40 minutes, and the mixture was then matured at 70°C for 3.5 hours. Thereafter, 4.40 g (0.059 mol) of glycidol was added and the mixture was matured at 70°C for 2.5 hours to obtain 113.19 g of a white gel. Because of NCO/OH = 2.0, "m" is 1. The physical properties are shown in Table 2.

### Example 9

A 500 mL separable flask was charged with 22.87 g (0.235 mol NCO) of di(isocyanatomethyl)cyclohexane (manufactured by Tokyo Chemical Industry Co., Ltd.), and a mechanical stirrer, a stirring blade, a dimroth reflux tube, a nitrogen gas inlet, and a thermometer were attached to the flask to flow nitrogen gas. Next, 0.22 g (0.1 mass%) of K-KAT XK-640 as a catalyst was added, and the temperature was raised until the internal temperature reached 60°C. Using a 300 mL dropping funnel, 200.00 g (0.118 mol OH, NCO/OH = 2.0) of 3-(2-hydroxyethoxy)propyldimethylsiloxy-terminated polydimethylsiloxane (n = 40, OH value was 33 mg KOH/g) was added thereto by a quarter of a liquid amount at a time over 40 minutes, and the mixture was then matured at 70°C for 3.5 hours. Thereafter, 8.78 g (0.118 mol) of glycidol was added and the mixture was matured at 70°C for 2.5 hours to obtain 228.22 g of a colorless, slightly turbid, viscous liquid. Because of NCO/OH = 2.0, "m" is 1. The physical properties are shown in Table 2.

### Example 10

A 500 mL separable flask was charged with 20.50 g (0.235 mol NCO) of 2,4-toluene diisocyanate (manufactured by Tokyo Chemical Industry Co., Ltd.), and a mechanical stirrer, a stirring blade, a dimroth reflux tube, a nitrogen gas inlet, and a thermometer were attached to the flask to flow nitrogen gas. Next, 100.00 g of dehydrated toluene (manufactured by KANTO CHEMICAL CO., INC.) was added, and the temperature was raised until the internal temperature reached 70°C. Using a 300 mL dropping funnel, 200.00 g (0.118 mol OH, NCO/OH = 2.0) of 3-(2-hydroxyethoxy)propyldimethylsiloxy-terminated polydimethylsiloxane (n = 40, OH value was 33 mg KOH/g) was added thereto over 1 hour 15 minutes, and the mixture was matured at 70°C for 6 hours. Thereafter, 9.23 g (0.124 mol) of glycidol was added and the mixture was matured at 70°C for 4 hours, 80°C for 28 hours, and 90°C for 19 hours to obtain 134.40 g of a colorless, transparent liquid. Because of NCO/OH = 2.0, "m" is 1. The physical properties are shown in Table 2.

### Example 11

A 500 mL separable flask was charged with 24.95 g (0.199 mol NCO) of 4,4'-bis(phenyl isocyanate)methane (manufactured by Tokyo Chemical Industry Co., Ltd.), and a mechanical stirrer, a stirring blade, a dimroth reflux tube, a nitrogen gas inlet, and a thermometer were attached to the flask to flow nitrogen gas. Next, 67.73 g of dehydrated toluene (manufactured by KANTO CHEMICAL CO., INC.) was added, and the temperature was raised until the internal temperature reached 70°C. Using a 300 mL dropping funnel, 169.50 g (0.100 mol OH, NCO/OH = 2.0) of 3-(2-hydroxyethoxy)propyldimethylsiloxy-terminated polydimethylsiloxane (n = 40, OH value was 33 mg KOH/g) was added thereto over 40 minutes, and the mixture was matured at 70°C for 8 hours. Thereafter, 7.50 g (0.101 mol) of glycidol was added, and the mixture was matured at 70°C for 11 hours, 80°C for 8.5 hours, and 90°C for 5 hours to obtain 232.64 g of a white gel. Because of NCO/OH = 2.0, "m" is 1. The physical properties are shown in Table 2.

### Example 12

A 500 mL separable flask was charged with 49.30 g (0.443 mol NCO) of isophorone diisocyanate, and a mechanical stirrer, a stirring blade, a dimroth reflux tube, a nitrogen gas inlet, and a thermometer were attached to the flask to flow nitrogen gas. Next, 0.25 g (0.1 mass%) of K-KAT XK-640 as a catalyst was added, and the temperature was raised until the internal temperature reached 60°C. Using a 300 mL dropping funnel, 200.30 g (0.222 mol OH, NCO/OH = 2.0) of 3-(2-hydroxyethoxy)propyldimethylsiloxy-terminated poly(dimethylsiloxane-diphenylsiloxane) copolymer containing a total amount of D3 to D6 of 0 ppm (n = 12 (dimethylsiloxy unit: 8, diphenylsiloxy unit: 4), OH value was 62 mg KOH/g) was added thereto over 1 hour, and the mixture was then matured at 70°C for 2 hours. Thereafter, 16.61 g (0.224 mol) of glycidol was added and the mixture was matured at 70°C for 2 hours to obtain 259.70 g of a colorless, slightly turbid, viscous liquid. Because of NCO/OH = 2.0, "m" is 1. The physical properties are shown in Table 2.

The low molecular cyclic siloxanes were extracted with 10 mL of hexane containing tetradecane as an internal standard for 1 g of a sample, and measured by GC. As a result, the total amount of D3 to D6 was 0 ppm.

**[Table 2]**

| | | Ex. 6 | Ex. 7 | Ex. 8 | Ex. 9 | Ex. 10 | Ex. 11 | Ex. 12 |
|---|---|---|---|---|---|---|---|---|
| Appearance | | White solid | White solid | White gel | Colorless, slightly turbid liquid | Colorless, transparen t liquid | White gel | Colorless, slightly turbid, viscous liquid |
| Viscosity (Pa·s) | | - | - | - | 45.7 | 2 9.4 | - | 39.5 |
| Volatile content at 105°C for 3 hours (%) | | 2.2 | 2.0 | 1.9 | 1.9 | 10.0 | 13.4 | 1.2 |
| Epoxy equivalent (g/mol) | | 2050 | 2210 | 2105 | 1980 | 2335 | 2350 | 1386 |
| GPC Mn | | 5,800 | 5,800 | 5,610 | 5,240 | 6,210 | 6,190 | 4,060 |
| | Mw | 14,420 | 12,760 | 15,040 | 13,690 | 15,170 | 15,680 | 6,850 |
| | Mw/Mn | 2.49 | 2.17 | 2.68 | 2.61 | 2.44 | 2.53 | 1.69 |

### Evaluation

### Study of Compatibility

One gram of tetraethylene pentamine (manufactured by Tokyo Chemical Industry Co., Ltd.) was added to 5 g of samples obtained from Examples 1, 2, 4, 5, and 12, and Comparative Example 1. Mixing (2,000 rpm) and deforming (2,200 rpm) were repeatedly performed 1 to 4 times using ARE-310, manufactured by THINKY CORPORATION to check the appearances of the samples (Examples 13 to 17 and Comparative Example 2).

As an epoxy-modified silicone, KF-105 (an epoxy equivalent was 510 g/mol) and X-22-163A (an epoxy equivalent was 1,000 g/mol), both manufactured by Shin-Etsu Chemical Co., Ltd. were prepared in the same manner, and the appearances thereof (immediately after mixing, and one week after mixing) were compared (Comparative Examples 3 and 4). The results are shown in Table 3 below.

**[Table 3]**

| | Ex. 13 | Ex. 14 | Ex. 15 | Ex. 16 | Ex. 17 | Comp Ex. 2 | Comp Ex. 3 | Comp Ex. 4 |
|---|---|---|---|---|---|---|---|---|
| Sample | Ex. 1 | Ex. 2 | Ex. 4 | Ex. 5 | Ex. 12 | Comp Ex. 1 | KF-105 | X-22-163A |
| Appearance (Immediately after mixing) | Colorless, slightly turbid | Colorless, slightly turbid | Colorless, slightly turbid | Colorless, transparent | Colorless, slightly turbid | Colorless, slightly turbid | Colorless, cloudy | Colorless, cloudy |
| Appearance (at 25°C, after 1 week) | Colorless, slightly turbid | Colorless, slightly turbid | Colorless, slightly turbid | Colorless, transparent | Colorless, slightly turbid | Colorless, slightly turbid | Two-phase separa -tion | Two-phase separa -tion |

### Study of Curing

Forty grams of samples obtained from Examples 1 to 5 and 7 to 12, and Comparative Example 1 with diphenyldiaminomethane (DDM) (manufactured by manufactured by Tokyo Chemical Industry Co., Ltd.) as an amine curing agent were used to produce cured products (Examples 18 to 28, and Comparative Example 5). The amount of DDM added was an amount such that an amount of N-H in DDM is 1 equivalent based on mole of each epoxy group. As a comparison, KF-105 and X-22-163A were used to prepare cured products in the same manner (Comparative Examples 6 and 7).

The samples and DDM were mixed at 100°C, the mixtures were poured into a mold having a size of 170 × 130 × 2 mm, and a lid was put on the mold to cure the mixture at 150°C for 3 hours. In Examples 10 and 11, solvents were removed with an evaporator, and the mixture was then poured into the mold to produce cured products.

The hardness was measured five times using Digi Test manufactured by BAREISS to obtain the average value. A breaking strength and a breaking elongation were measured three time using AGS-X, manufactured by Shimazu Corporation (at a tensile speed of 500 mm/min) after punching the cured products with a No. 2 dumbbell cutter to obtain the average values. The results are shown in Tables 4 and 5.

**[Table 4]**

| | Ex. 18 | Ex. 19 | Ex. 20 | Ex. 21 | Ex. 22 | Ex. 23 | Ex. 24 |
|---|---|---|---|---|---|---|---|
| Sample | Ex. 1 | Ex. 2 | Ex. 3 | Ex. 4 | Ex. 5 | Ex. 7 | Ex. 12 |
| Appearance | Light yellow, transparent | Light yellow, translucent | Light yellow, opaque | Light yellow, transparent | Light yellow, opaque | Light yellow, transparent | Light yellow, transparent |
| Hardness (Shore A) | 53 | 36 | 19 | 81 | 35 | 43 | 58 |
| Breaking strength (MPa) | 7.77 | 3.63 | 0.86 | 17.69 | 1.75 | 3.14 | 8.68 |
| Breaking elongation (%) | 298 | 292 | 273 | 181 | 182 | 237 | 235 |

**[Table 5]**

| | Ex. 25 | Ex. 26 | Ex. 27 | Ex. 28 | Comp Ex. 5 | Comp Ex. 6 | Comp Ex. 7 |
|---|---|---|---|---|---|---|---|
| Sample | Ex. 8 | Ex. 9 | Ex. 10 | Ex. 11 | Comp Ex. 1 | KF-105 | X-22-163A |
| Appearan ce | Light yellow, transparent | Light yellow, transparent | Light yellow, transparent | Light yellow, translucent | Non-uniformly cured | Light yellow, transparent | Not cured |
| Hardness (Shore A) | 21 | 22 | 47 | 55 | - | 30 | - |
| Breaking strength (MPa) | 1.50 | 2.15 | 4.04 | 2.37 | - | 0.56 | - |
| Breaking elongation (%) | 451 | 510 | 291 | 100 | - | 43 | - |

As shown in Examples 13 to 17, the polyorganosiloxane of the present invention was very compatible with the amine curing agent (tetraethylene pentamine) at room temperature and did not separate after the lapse of one week. On the other hand, the separation of the epoxy-modified silicones in Comparative Examples 3 and 4 and the amine curing agent was highly noticeable.

When heat-curing was performed at a high temperature with the addition of the amine curing agent, the polyorganosiloxane of the present invention having good compatibility with the amine curing agent allowed a cured product to be obtained without problems regardless of the values of the epoxy equivalent (Examples 18 to 28). In addition, for both the breaking strength and the breaking elongation, excellent values were obtained.

On the other hand, for the epoxy-modified silicones in Comparative Examples 6 and 7, the epoxy-modified silicone having a high epoxy equivalent (Comparative Example 7) had a problem of separation and remained uncured. In addition, the epoxy-modified silicone having a low epoxy equivalent (Comparative Example 6) was cured by heating at a high temperature to produce a light yellow, transparent cured product, but the product showed low breaking strength and low breaking elongation values. In addition, for the polyorganosiloxane (Comparative Example 1) having a degree of polymerization highly deviated from the scope of the present invention, the result of Comparative Example 5 showed a deterioration in the dispersion to an epoxy resin. Therefore, the results showed that the polyorganosiloxane of the present invention had excellent performance.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A polyorganosiloxane represented by the following formula (1): 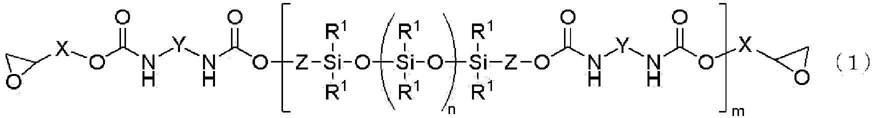 wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2.

2. The polyorganosiloxane according to claim 1, wherein the polyorganosiloxane represented by the formula (1) has a number average molecular weight of 500 to 100,000 in terms of standard polystyrene.

3. The polyorganosiloxane according to claim 1 or 2, wherein the polyorganosiloxane represented by the formula (1) has an epoxy equivalent (g/mol) of 300 to 5,000 g/mol.

4. The polyorganosiloxane according to any one of claims 1 to 3, wherein the polyorganosiloxane represented by the formula (1) comprises hexamethylcyclotrisiloxane (D3), octamethylcyclotetrasiloxane (D4), decamethylcyclopentasiloxane (D5), and dodecamethylcyclohexasiloxane (D6) in a total amount equal to or less than 3,000 ppm.

5. A method for producing a polyorganosiloxane represented by the following formula (1): 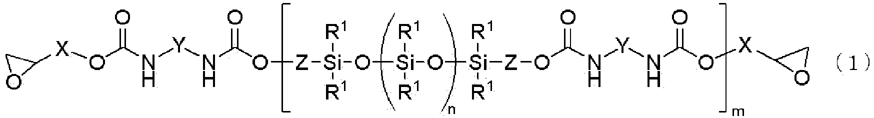
wherein R¹ each independently represents a group selected from an alkyl group having 1 to 12 carbon atoms, an aryl group having 6 to 12 carbon atoms, and an aralkyl group having 7 to 12 carbon atoms, or a hydroxyl group; X each independently represents a divalent alkylene group having 1 to 10 carbon atoms; Y each independently represents a group selected from an alkylene group having 5 to 30 carbon atoms which may have an ether bond, an arylene group having 6 to 30 carbon atoms, and an aralkylene group having 7 to 30 carbon atoms; Z each independently represents an alkylene group having 1 to 20 carbon atoms which may have an ether bond; "n" represents an integer of 0 to 100; and "m" is 1 to 2,
the method comprising,
reacting a both-end carbinol-modified silicone represented by the following formula (2), a diisocyanate compound represented by the following formula (3), and a compound having an epoxy group and a hydroxyl group represented by the following formula (4) in presence or absence of a catalyst, and in presence or absence of a solvent: 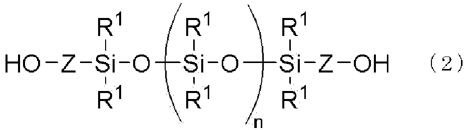
O=C=N-Y-N=C=O (3) 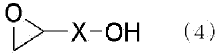
wherein each of R¹, X, Y, Z, and "n" is same as the above.

6. The method for producing the polyorganosiloxane according to claim 5, wherein a both-end carbinol-modified silicone having a hydroxyl value (OH value) of 10 to 500 mg KOH/g is used as the both-end carbinol-modified silicone represented by the formula (2).

7. The method for producing the polyorganosiloxane according to claim 5 or 6, wherein the both-end carbinol-modified silicone represented by the formula (2) comprises hexamethylcyclotrisiloxane (D3), octamethylcyclotetrasiloxane (D4), decamethylcyclopentasiloxane (D5), and dodecamethylcyclohexasiloxane (D6) in a total amount equal to or less than 3,000 ppm.

8. The method for producing the polyorganosiloxane according to any one of claims 5 to 7, wherein the reaction is performed such that a ratio of a number of moles of a hydroxyl group (OH) (mol OH) in the both-end carbinol-modified silicone represented by the formula (2) to a number of moles of an isocyanate group (NCO) (mol NCO) in the diisocyanate compound represented by the formula (3) (NCO/OH ratio) is 1.5 to 2.0.
